# EUROPÄISCHE PATENTSCHRIFT

(11) **EP 3 823 438 B1**
(45) Veröffentlichungstag und Bekanntmachung des Hinweises auf die Patenterteilung: **27.12.2023**
(21) Anmeldenummer: 19734375.9
(22) Anmeldetag: 27.06.2019
(51) Int. Cl.: A01G 9/04, A01G 27/00, A01G 27/02

(54) **VORRICHTUNG ZUR BEWAESSERUNG VON PFLANZEN**
DEVICE FOR IRRIGATION OF PLANTS
DISPOSITIF D'ARROSAGE DE PLANTES

(30) Priorität: 17.07.2018 DE 102018117200
(43) Veröffentlichungstag der Anmeldung: 26.05.2021
(73) Patentinhaber: FASS-FRISCH GmbH, 75031 Eppingen-Mühlbach (DE)
(72) Erfinder: TILL, Rudolf, 76530 Baden-Baden (DE)
(74) Vertreter: Mehl-Mikus, Claudia
(86) Internationale Anmeldenummer: PCT/EP2019/067143
(87) Internationale Veröffentlichungsnummer: WO 2020/015972

(56) Entgegenhaltungen:
- DE-B- 1 045 712
- DE-U1-202007 002 560
- FR-A- 1 473 290
- FR-A- 1 563 819
- GB-A- 2 556 979

## Beschreibung

Die Erfindung betrifft eine Vorrichtung zur Bewässerung von Pflanzen, die in einem nicht hydroponischen Substrat aufgenommen sind, d.h. in einem Substrat, das kein Hydrokultur-Substrat ist. Bei dem Substrat handelt es sich somit in Wesentlichen um Erde oder erdähnliche Substanzen, einschließlich Sand, im Gegensatz zu Hydrokultur-Substraten, die aus porösen Ton-Kügelchen bestehen und stark hygroskopisch sind. Während bei hydroponischen Substraten oder Hydrokulturen die Pflanzen mit ihren Wurzeln zumindest teilweise im Wasser stehen, ist des bei Pflanzen, die in nicht hydroponischen Substraten aufgenommen sind, schädlich, da dann Fäulnis auftreten würde.

Aus der EP 0 515 207 A1 ist eine Vorrichtung zur Bewässerung von Pflanzen bekannt, bei der im Bodenbereich eines Pflanzgefäßes ein Flüssigkeitsvolumen aufgenommen ist. Das Flüssigkeitsvolumen kann über einen vertikalen Füllstab, der nach oben hervorsteht, aufgefüllt werden. Innerhalb des Pflanzgefäßes ist ein Zwischenboden vorgesehen, der oberhalb des Flüssigkeitsspiegels endet und der über ein Rohr mit einem nicht kompressiblen, flüssigkeitsdurchlässigen Material mit dem Flüssigkeitsvolumen in Verbindung steht, so dass Flüssigkeit aus dem Flüssigkeitsvolumen in den Hohlraum oberhalb des Zwischenbodens bis in das Substrat aufsteigen kann, in dem die Pflanze aufgenommen ist.

Eine derartige Ausführung ist aufwendig und erfordert eine ständige Überwachung. Außerdem sind hierzu spezielle Pflanzgefäße notwendig.

Aus der US 3 534 498 A ist eine weitere Vorrichtung zur Bewässerung von Pflanzen bekannt. Hierbei ist innerhalb eines Gefäßes ein Innengefäß vorgesehen, in dem eine Pflanze mit einem Erdsubstrat aufgenommen ist. Ferner ist innerhalb des Gefäßes ein Flüssigkeitsbehälter vorgesehen, der das Innengefäß für die Pflanze umgibt und der über ein Auslaufrohr mit einem Flüssigkeitsvolumen in Verbindung steht, dessen Höhe durch das Ende des Auslaufrohrs vorgegeben ist Das Flüssigkeitsvolumen erstreckt sich unterhalb des Innenhohlraums, in dem de Pflanze mit einem Erdsubstrat aufgenommen ist. Zur Befeuchtung ist mindestens ein Rohr vorgesehen, das in das Flüssigkeitsvolumen hineinragt und mit einem hygroskopischen Material gefüllt ist, so dass Flüssigkeit aus dem Flüssigkeitsvolumen in das darüber liegende, beabstandete Innengefäß aufsteigen kann.

Bei einer Variante, die für hydroponische Substrate, also für Hydrokultur-Substrate, vorgesehen ist, steht die Pflanze mit ihren Wurzeln teilweise im Wasser, und das Flüssigkeitsvolumen ist bis in einen Bereich etwa innerhalb des unteren Drittels oder der Hälfte des Pflanzhohlraums angehoben. Die Pflanze steht somit mit ihren Wurzeln und mit den sie umgebenden Ton-Kügelchen zu einem großen Teil unmittelbar im Wasser. Der Flüssigkeitsspiegel des Flüssigkeitsvolumens wird auch hierbei durch das untere Ende des Auslaufrohrs vorgegeben.

Auch bei der vorgenannten Anordnung befindet sich der Pflanzhohlraum zur Aufnahme der Pflanze mit einem nicht hydroponischen Substrat, also beispielsweise einem Erdsubstrat, mit einem Abstand oberhalb des durch das untere Ende des Auslaufrohrs vorgegebenen Flüssigkeitsniveaus. Das zusätzlich notwendige mindestens eine Saugrohr mit einer hygroskopischen Substanz, die in das Flüssigkeitsvolumen unterhalb des Pflanzhohlraums hineinragt, führt zu einem komplizierten Aufbau und in jedem Falle zu einer deutlichen Vergrößerung der Gesamtvorrichtung.

Aus der FR 1 473 290 A ist eine Vorrichtung zur Bewässerung von Pflanzen gemäß dem Oberbegriff von Anspruch 1 bekannt.

Weitere Vorrichtungen ähnlicher Art sind aus der FR 1 563 819 A, aus der DE 10 45 712 B, aus der DE 20 2007 002 560 U1 und der GB 2 556 979 A bekannt.

Vor diesem Hintergrund liegt der Erfindung die Aufgabe zugrunde, eine Vorrichtung zur Bewässerung von Pflanzen anzugeben, die in einem nicht hydroponischen Substrat aufgenommen sind, mit der eine zuverlässige und einfache Bewässerung ermöglicht ist, wobei die Pflanzen möglichst optimal mit Wasser versorgt werden.

Diese Aufgabe wird durch eine Vorrichtung gemäß Anspruch 1 gelöst.

Die Aufgabe der Erfindung wird auf diese Weise vollkommen gelöst.

Durch den Flüssigkeitsbehälter wird erfindungsgemäß innerhalb des Pflanzgefäßes in einem vom Pflanzhohlraum abgetrennten Bereich ein Flüssigkeitsvolumen mit einem bestimmten Flüssigkeitsspiegel eingestellt, der sich auf einem Niveau oberhalb des Bodens des Pflanzhohlraums in einem geringen Abstand befindet. Aus dem Flüssigkeitsvolumen kann somit über die mindestens eine Verbindungsöffnung Flüssigkeit in das Substrat abgegeben werden. Dabei gelangt immer nur eine solche Menge an Flüssigkeit in den Pflanzhohlraum, wie von der Pflanze tatsächlich angefordert wird. Pflanzen, die wenig Wasser verbrauchen, wie z.B. Kakteen, Orchideen oder dergleichen, werden nur sehr wenig Flüssigkeit aufnehmen. Dagegen nehmen Pflanzen, die einen hohen Flüssigkeitsbedarf haben, ständig über die mindestens eine Verbindungsöffnung Flüssigkeit auf. Ausreichend Flüssigkeit wird dadurch zugeführt, dass aus dem Flüssigkeitsbehälter immer soviel Flüssigkeit in den abgetrennten Bereich nachfließt, dass immer der Flüssigkeitsspiegel eingehalten wird, der durch das untere Ende des Auslaufrohrs vorgegeben ist. Hieraus entnimmt sich die Pflanze in Abhängigkeit von ihrem Flüssigkeitsbereich immer so viel Flüssigkeit über die mindestens eine Verbindungsöffnung, dass sich im Substrat eine Durchfeuchtung einstellt, die pflanzengerecht ist. In Abhängigkeit vom Flüssigkeitsbedarf der Pflanze und dem verwendeten Substrat (z.B. Torf bei hohem Flüssigkeitsbedarf oder z.B. Sand für geringen Flüssigkeitsbedarf) stellt sich eine in einem Gleichgewicht befindliche mehr oder minder große Durchfeuchtung im Substrat ein.

Da das untere Ende des Auslaufrohrs hierbei nur einem geringen Abstand vom Boden des Pflanzgefäßes mündet, der maximal 1% der Gesamthöhe des Pflanzhohlraums beträgt und da ferner die mindestens eine Verbindungsöffnung nur einen geringen Querschnitt aufweist, von höchstens 2 mm², fließt in der Regel Flüssigkeit aus dem abgetrennten Flüssigkeitsvolumen nicht so schnell in den Pflanzhohlraum nach, dass sich am Boden ein Flüssigkeitsvolumen bildet.

Beträgt beispielsweise die Gesamthöhe des Pflanzgefäßes 20 cm, so befindet sich der Flüssigkeitsspiegel maximal in einem Abstand von 2 mm vom Boden des Pflanzgefäßes, vorzugsweise maximal 1 mm. Über die Verbindungsöffnung wird somit die Flüssigkeit aus dem Flüssigkeitsvolumen nur mit einem sehr geringen hydrostatischen Druck in das Innere des Pflanzhohlraums zugeführt. Im Wesentlichen wird daher die Flüssigkeitsabgabe aus dem Flüssigkeitsvolumen in den Pflanzhohlraum davon bestimmt, wie schnell die Flüssigkeit von der Pflanze aufgenommen wird. Maximal könnte sich ein Flüssigkeitsspiegel innerhalb des Pflanzhohlraums einstellen, der mit dem Flüssigkeitsspiegel innerhalb des abgetrennten Bereiches niveaumäßig übereinstimmt. Da jedoch die mindestens eine Verbindungsöffnung nur einen geringen Querschnitt aufweist, von z.B. 0,5 mm², oder 1 mm², oder 2 mm², fließt in der Regel Flüssigkeit aus dem abgetrennten Flüssigkeitsvolumen nicht so schnell in den Pflanzhohlraum nach, dass sich am Boden ein Flüssigkeitsvolumen bildet.

In zweckmäßiger Ausgestaltung der Erfindung weist der abgetrennte Bereich mindestens eine im Bereich der Oberseite des Pflanzhohlraums mündende Belüftungsöffnung auf.

Auf diese Weise ist das Nachfließen von Flüssigkeit aus dem Flüssigkeitsbehälter unter der Wirkung des atmosphärischen Außendrucks gewährleistet, damit immer das gewünschte Niveau des Flüssigkeitsspiegels eingehalten wird, das durch das untere Ende des Auslaufrohrs vorgegeben ist.

Gemäß einer weiteren Ausgestaltung der Erfindung ist der Flüssigkeitsbehälter zumindest teilweise in das Pflanzgefäß integriert und weist auf seiner Oberseite eine Einfüllöffnung auf, die mittels eines ersten Ventils verschließbar ist, das mit einem zweiten Ventil am Auslaufrohr derart gekoppelt ist, dass bei geöffnetem ersten Ventil zum Einfüllen von Flüssigkeit das zweite Ventil geschlossen ist, und dass bei geschlossenem ersten Ventil das zweite Ventil geöffnet ist.

Auf diese Weise ist ein einfaches Befüllen des Flüssigkeitsbehälters in einer Füllstellung ermöglicht, während ein Übergehen zu einer Gebrauchsstellung, in der sich das Flüssigkeitsniveau automatisch reguliert, durch Umstellen der beiden Ventile ermöglicht ist.

Hierzu sind die beiden Ventile vorzugsweise als Schiebeventile ausgebildet, die über eine Stange miteinander gekoppelt sind.

Gemäß einer weiteren Ausgestaltung der Erfindung ist an der Einfüllöffnung ein Trichter vorgesehen.

Dies ermöglicht ein einfaches Einfüllen von Flüssigkeit in den Flüssigkeitsbehälter.

Gemäß einer weiteren Ausgestaltung der Erfindung ist der Flüssigkeitsbehälter mit seinem Auslaufrohr von oben in ein Belüftungs- und Führungsrohr einsteckbar.

Dies ermöglicht eine besonders einfache Integration des Flüssigkeitsbehälters in das Pflanzgefäß. Die notwendige Führung des Flüssigkeitsbehälters ist durch das Belüftungs- und Führungsrohr gewährleistet, worüber gleichzeitig auch die Belüftung erfolgt, um das Flüssigkeitsniveau in der gewünschten Weise einzustellen.

Gemäß einer weiteren Ausgestaltung der Erfindung weist der Flüssigkeitsbehälter einen Vorratsbehälter auf, der mit dem Auslaufrohr lösbar verbunden ist, vorzugsweise über eine Gewindeverbindung.

Dieses Merkmal hat den Vorteil, dass der Flüssigkeitsbehälter auf besonders einfache Weise befüllt werden kann.

Gemäß einer ersten Variante der Erfindung ist das Belüftungs- und Führungsrohr innerhalb einer Wandung des Pflanzgefäßes gehalten.

Auf diese Weise kann der Flüssigkeitsbehälter mit seinem Auslaufrohr unmittelbar in das das Belüftungs- und Führungsrohr im Pflanzgefäß eingesteckt werden.

Gemäß einer anderen Variante ist das Belüftungs- und Führungsrohr an der Außenseite der Wandung des Pflanzgefäßes gehalten und mündet in eine Schale, in der das Pflanzgefäß aufgenommen ist, wobei am Boden des Pflanzgefäßes mindestens eine Öffnung zum Durchtritt von Flüssigkeit vorgesehen ist.

Eine derartige Variante eignet sich besonders zur Bewässerung von Pflanzen, wie beispielsweise bei Kräutertöpfen, die in Supermärkten angeboten werden.

Gemäß einem weiteren Merkmal der Erfindung ist am Flüssigkeitsbehälter ein Füllstandssensor vorgesehen, der eine Schnittstelle zur drahtlosen Kommunikation mit einem externen Überwachungsgerät aufweist.

Auf diese Weise kann ein ausreichender Füllstand der Vorrichtung auf einfache Weise überwacht werden.

Gemäß einer weiteren Ausgestaltung der Erfindung weist die Schnittstelle eine Bluetooth-Schnittstelle oder eine WLAN-Schnittstelle zur Kommunikation mit dem externen Überwachungsgerät auf.

Bei dem externen Überwachungsgerät kann es sich beispielsweise um ein Smartphone, ein Tablet oder einen Computer handeln, wobei eine Kommunikation mit dem Füllstandssensor über eine Softwareschnittstelle erfolgt.

Auf diese Weise können ein oder mehrere Bewässerungsvorrichtungen bequem mit einem externen Überwachungsgerät, wie beispielsweise einem Smartphone, überwacht werden. Hierbei kann über eine geeignete App in Abhängigkeit von der Pflanzenart und -größe beispielsweise im Voraus der Flüssigkeitsbedarf ermittelt werden, um etwa bei einer längeren Abwesenheit ausreichend Flüssigkeit bereitzustellen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erste Ausführung einer erfindungsgemäßen Vorrichtung zur Bewässerung von Pflanzen in einer Gebrauchsstellung;
- Fig. 2: die Vorrichtung gemäß Fig. 1 in einer Stellung zum Befüllen des Flüssigkeitsbehälters;
- Fig. 3: eine weitere Ausführung einer erfindungsgemäßen Vorrichtung mit einem Flüssigkeitsbehälter, der in ein Belüftungs- und Führungsrohr innerhalb des Pflanzgefäßes einsteckbar ist;
- Fig. 4: eine weitere Abwandlung der Erfindung, bei der ein Flüssigkeitsbehälter vorgesehen ist, der in ein Belüftungs- und Führungsrohr an der Außenseite einer Wandung des Pflanzbehälters einsteckbar ist und wobei die Bewässerung über eine Schale oder einen Untersetzer erfolgt, worin das Pflanzgefäß steht und
- Fig. 5: eine weitere Abwandlung der Ausführung gemäß Fig. 4, wobei ein Sensor mit einer Schnittstelle zur Kommunikation mit einem externen Überwachungsgerät vorgesehen ist.

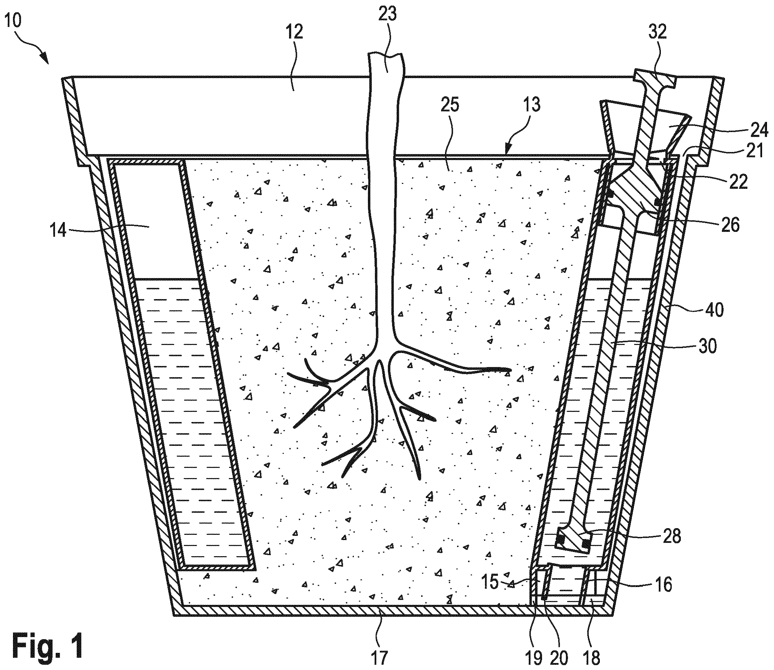

In Fig. 1 ist eine erste Ausführung einer erfindungsgemäßen Bewässerungsvorrichtung im Querschnitt dargestellt und insgesamt mit der Ziffer 10 bezeichnet. Die Vorrichtung 10 weist ein topfförmiges Pflanzgefäß von konischer Grundform auf, mit einem konischen Pflanzhohlraum 13 mit einer umlaufenden Wandung 14 und einem Boden 17. Im Pflanzhohlraum 13 ist unmittelbar angrenzend an die Wandung 40 ein Flüssigkeitsbehälter 14 mit einer konischen, ringförmigen Grundform vorgesehen. Das untere Ende des Behälters 14 endet mit einem gewissen Abstand oberhalb des Bodens 17.

An einer Seite des Flüssigkeitsbehälters 14 ist dieser zusätzlich nach unten hin verlängert und bildet einen gegenüber dem Pflanzhohlraum 13 flüssigkeitsdicht abgetrennten Bereich 15. In diesem abgetrennten Bereich 15 erstreckt sich ein Auslaufrohr 16, das im vorliegenden Fall lediglich als Rohrstutzen ausgebildet ist, der an einer Seite mit einem oberen Ende 20 in einem gewissen Abstand vom Boden 17 des Pflanzgefäßes 12 mündet.

Der abgetrennte Bereich 15 steht ferner seitlich über eine nach oben hin verlaufende Belüftung mit der Außenseite in Verbindung, die am oberen Ende des Pflanzhohlraums 13 in einer Belüftungsöffnung 21 nach außen hin ausmündet. Durch das obere Ende des Auslaufrohrs 20, das sich in einem Abstand von z.B. 1 bis 2 mm vom Boden 17 des Pflanzgefäßes 12 befindet, stellt sich infolge des atmosphärischen Drucks ein Flüssigkeitsvolumen ein, das durch einen Flüssigkeitsspiegel 18 nach oben hin begrenzt wird. Der Flüssigkeitsspiegel 18 ist durch das obere Ende des Auslaufrohrs 20 vorgegeben. Der abgetrennte Bereich 15 steht durch eine Verbindungsöffnung 19, die sich auf einem Niveau innerhalb des Flüssigkeitsvolumens 18 befindet, mit dem Pflanzhohlraum 13 in Verbindung. Stellt sich somit innerhalb des abgetrennten Bereichs 15 ein Flüssigkeitsvolumen ein, das nach oben hin durch den Flüssigkeitsspiegel begrenzt ist, so gelangt Flüssigkeit aus dem Flüssigkeitsvolumen 18 über die Verbindungsöffnung 19 in den Pflanzhohlraum 13.

Im Pflanzhohlraum 13 ist eine Pflanze 23 mit einem nicht hydroponischen Substrat 25 aufgenommen. Es handelt sich hierbei also um ein Substrat, das von dem bei einer Hydrokultur verwendeten Substrat abweicht. Es könnte sich also beispielsweise um Erde, eine erdähnliche Substanz oder ein Gemisch mit Sand oder dergleichen handeln. Aus dem Flüssigkeitsvolumen 18, das sich infolge des Pipetteneffekts unterstützt durch den äußeren atmosphärischen Druck mit einem vorgegebenen Abstand vom Boden 17 des Pflanzgefäßes 12 einstellt, wird somit über die mindestens eine Verbindungsöffnung 19 Flüssigkeit in den Pflanzhohlraum 13 abgegeben. Es wird immer nur soviel Flüssigkeit abgegeben, wie tatsächlich von der Pflanze 23 aufgenommen wird. Somit wird vermieden, dass die Pflanze 23 mit ihren Wurzeln unmittelbar im Wasser steht. Gleichfalls wird gewährleistet, dass immer so viel Flüssigkeit über die mindestens eine Verbindungsöffnung 19 nachfließt, wie von der Pflanze 23 verbraucht wird.

Der Gesamtquerschnitt der mindestens einen Verbindungsöffnung 19 ist ausreichend klein bemessen, so dass sich der Flüssigkeitsspiegel möglichst nicht bis in den Pflanzhohlraum 13 erstreckt. Je nach dem Flüssigkeitsbedarf der Pflanze 23 und dem verwendeten Substrat 25 stellt sich im Substrat 25 eine mehr oder minder große Durchfeuchtung ein, die sich im Gleichgewicht befindet.

In Fig. 1 ist zusätzlich noch ein Hilfsmittel zur Befüllung des nach außen hin hermetisch abgeschlossenen Flüssigkeitsbehälters 14 dargestellt.

Am oberen Ende ist ein Trichter 24 vorgesehen, der über eine Öffnung 22 mit dem Flüssigkeitsbehälter 14 in Verbindung steht. Im Flüssigkeitsbehälter 14 sind ein erstes Ventil 26 an der Oberseite und ein zweites Ventil 28 an der Unterseite vorgesehen. Die beiden Ventile 26, 28 sind über eine Stange 30 miteinander verbunden und können von der Oberseite des Pflanzgefäßes 12 aus mittels eines Griffes 32 betätigt werden. In der in Fig. 1 gezeigten Stellung dichtet das erste Ventil 26 am oberen Ende mit einer zugeordneten zylindrischen Innenfläche ab, so dass der Hohlraum 14 nach außen hin hermetisch abgedichtet ist. In dieser Position ist das untere, zweite Ventil 28 außer Funktion. Dies bedeutet, dass in dieser Stellung Flüssigkeit aus dem Flüssigkeitsbehälter 14 unmittelbar über das Auslaufrohr 16 bis in das Flüssigkeitsvolumen 18 austreten kann.

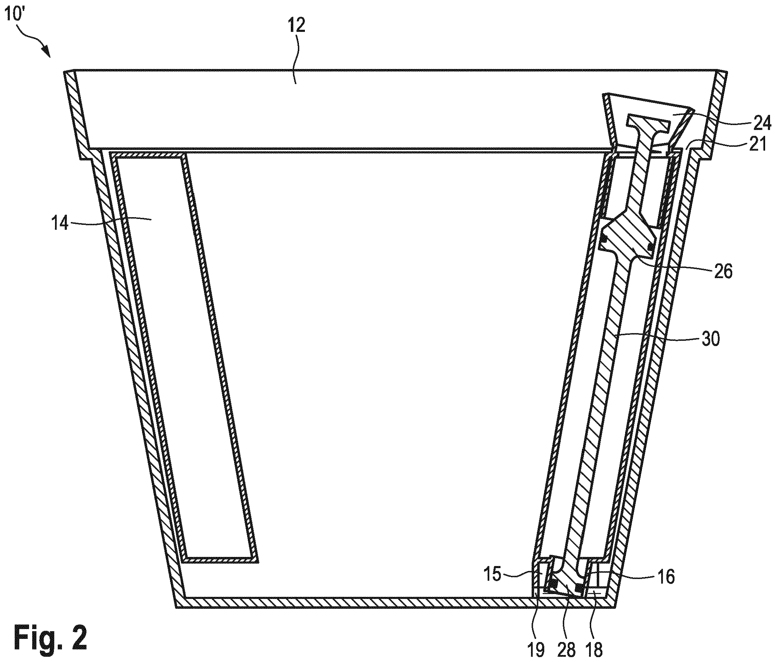

Soll der Flüssigkeitsbehälter 14 befüllt werden, so wird die Stange 30 nach unten verschoben, so dass sich eine Stellung gemäß Fig. 2 ergibt, die insgesamt mit 10' dargestellt ist. Hierbei ist das erste Ventil 26 außer Funktion, während das zweite Ventil 28 innerhalb des Auslaufrohrs 16 abdichtet. Somit kann der Flüssigkeitsbehälter 14 in dieser Stellung über den Trichter 24 von außen mit Wasser befüllt werden.

Für den Gebrauch wird die Stange 30 dann wieder in die andere Stellung nach oben gezogen, so dass das erste Ventil 26 geschlossen ist und das zweite Ventil 28 geöffnet ist und sich die Stellung gemäß Fig. 1 ergibt.

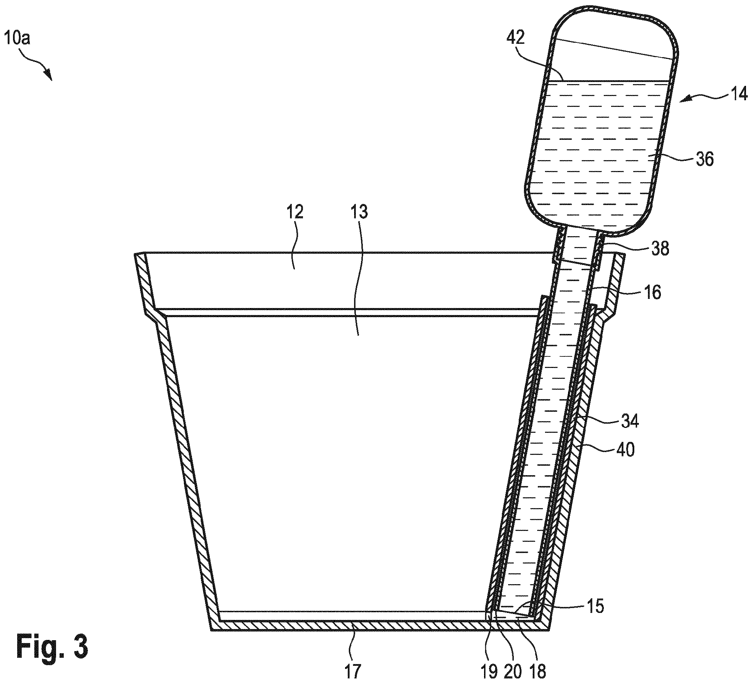

In Fig. 3 ist eine weitere Abwandlung einer erfindungsgemäßen Bewässerungsvorrichtung dargestellt und insgesamt mit der Ziffer 10a bezeichnet. Im Übrigen werden für entsprechende Teile entsprechende Bezugsziffern verwendet.

Hierbei ist anstelle eines vollständig in das Pflanzgefäß 12 integrierten Flüssigkeitsbehälters mit einem ringförmigen Volumen, nunmehr ein Flüssigkeitsbehälter 14 vorgesehen, der einen Vorratsbehälter 36 aufweist, der über eine Gewindeverbindung 38 mit dem Auslaufrohr 16 in Verbindung steht.

Das Auslaufrohr 16 ist in diesem Fall in ein Belüftungs- und Führungsrohr 34, das innerhalb der Wandung 40 unmittelbar daran angrenzend verläuft, von oben eingesteckt.

Am unteren Ende ist wiederum ein abgetrennter Bereich 15 vorgesehen, der lediglich über eine Verbindungsöffnung 19 mit dem Pflanzhohlraum 13 in Verbindung steht. Der Flüssigkeitsbehälter 14 ist in das Belüftungs- und Führungsrohr 34 von oben eingesteckt und darin gehalten, so dass das Auslaufrohr 16 wiederum in einem Abstand vom Boden 17 mündet, der mit der Ziffer 20 bezeichnet ist. Es stellt sich somit innerhalb des abgetrennten Bereiches 15 ein Flüssigkeitsniveau ein, das durch das Niveau des Endes 20 des Auslaufrohrs 16 vorgegeben ist. Die Belüftung erfolgt über das Belüftungs- und Führungsrohr 34. Aus dem Flüssigkeitsvolumen 18 tritt Flüssigkeit über die mindestens eine Verbindungsöffnung 19 in den Pflanzhohlraum 13 über. Austretende Flüssigkeit wird aus der Flüssigkeit innerhalb des Vorratsbehälters 36 ergänzt, so dass das Niveau 42 der Flüssigkeit im Vorratsbehälter 36 nach und nach absinkt.

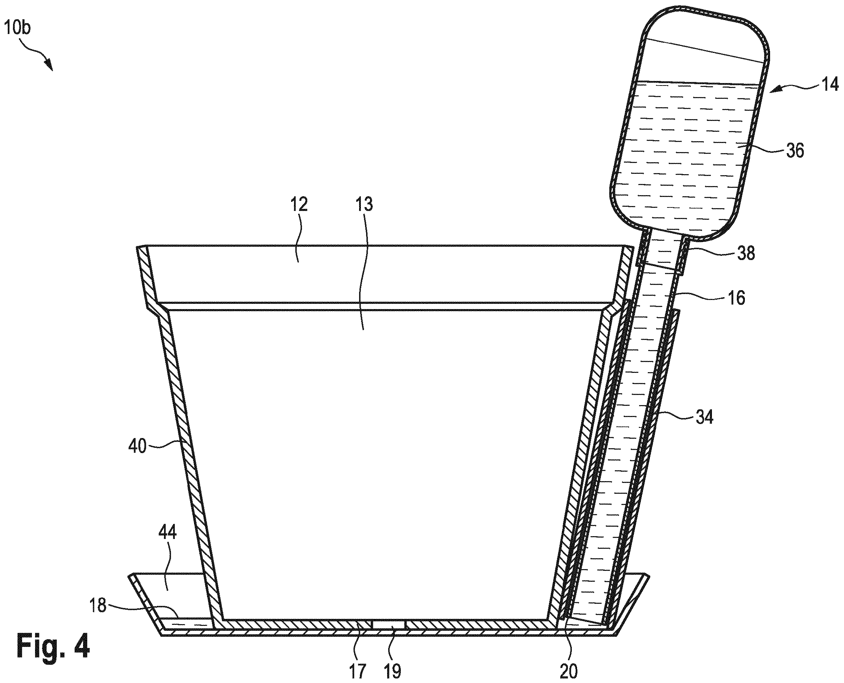

Fig. 4 zeigt eine weitere Abwandlung der Erfindung, die insgesamt mit 10b bezeichnet ist.

Der wesentliche Unterschied zur zuvor beschriebenen Ausführung besteht darin, dass das Belüftungs- und Führungsrohr34, in welches der Flüssigkeitsbehälter 14 mit seinem Auslaufrohr 16 eingesteckt ist, nicht innerhalb der Wandung 40 sondern außerhalb der Wandung 40 gehalten ist. Das Belüftungs- und Führungsrohr 34 mündet an seinem unteren Ende in einer Topfschale 44, in der das Pflanzgefäß 12 steht. In der Topfschale 44 stellt sich somit wiederum ein Flüssigkeitsvolumen 18 ein, dessen Niveau durch die Mündung des Belüftungs- und Führungsrohrs 34 vorgegeben ist. Das Pflanzgefäß 12 weist in seinem Boden 17 mindestens eine Verbindungsöffnung 19 auf, aus der Flüssigkeit aus dem Flüssigkeitsvolumen 18 in das Innere des Pflanzhohlraums 13 übertreten kann.

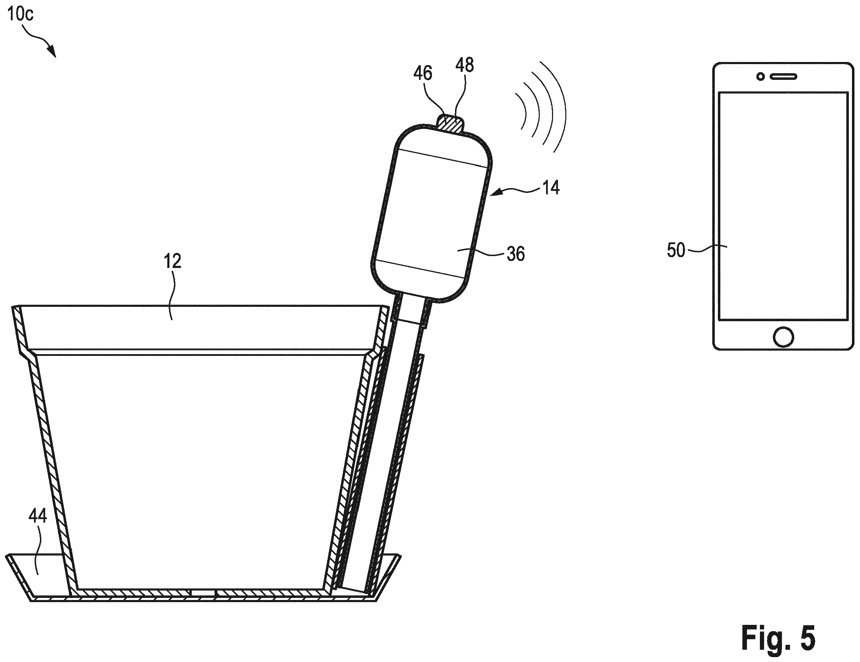

Eine weitere Abwandlung der Erfindung ist in Fig. 5 dargestellt und insgesamt mit der Ziffer 10c bezeichnet. Zusätzlich ist hierbei ein Füllstandssensor 46 am oberen Ende des Vorratsbehälters 36 vorgesehen. Der Füllstandssensor 46 ist mit einer Schnittstelle 48 gekoppelt, über welche das aufgenommene Signal beispielsweise über Bluetooth oder WLAN über eine geeignete Softwareschnittstelle kommuniziert wird und mittels eines externen Überwachungsgerätes 50 aufgenommen werden kann. Bei dem externen Überwachungsgemäß 50 handelt es sich beispielsweise um ein Smartphone oder um ein Tablet, das mittels einer geeigneten App betrieben werden kann.

Somit kann eine automatische Überwachung des Flüssigkeitsfüllstands bei der Vorrichtung 10c durchgeführt werden.

Je nach Gestaltung der App kann dies genutzt werden, um verschiedene Bewässerungsvorrichtungen gleichzeitig zu überwachen und um beispielsweise eine ausreichende Flüssigkeitsmenge je nach Art und Größe der zu bewässernden Pflanze etwa bei einer längeren Abwesenheit bereitzustellen.

## Patentansprüche

1. Vorrichtung zur Bewässerung von Pflanzen, die in einem nicht hydroponischen Substrat aufgenommen sind, mit einem nach oben offenen Pflanzgefäß (12) zur Aufnahme mindestens einer Pflanze (23) mit nicht hydroponischen Substrat (25), wobei das Pflanzgefäß (12) einen von einer Wandung (40) und einem Boden (17) umschlossenen Pflanzhohlraum (13) zur Aufnahme einer Pflanze (23) mit dem Substrat (25) aufweist, mit einem Flüssigkeitsbehälter (14), der im Pflanzgefäß (12) zumindest teilweise integriert ist oder als separater Flüssigkeitsbehälter ausgebildet ist, der von oben in das Pflanzgefäß (12) eingesteckt ist oder an einer Außenwand des Pflanzgefäßes (12) gehalten ist, wobei der Flüssigkeitsbehälter (14) ein nach außen hin abgedichteter Behälter ist, der ein Auslaufrohr (16) aufweist, das in einem vom Pflanzhohlraum (13) abgetrennten Bereich (15) mit einem bestimmten Abstand vom Boden (17) des Pflanzgefäßes (12) mündet, wobei der abgetrennte Bereich über mindestens eine Verbindungsöffnung (19) mit dem Pflanzhohlraum (13) in Verbindung steht und über mindestens eine Belüftungsöffnung (21) mit einer Außenseite des Pflanzgefäßes (12) in Verbindung steht, derart, dass sich unterhalb des Auslaufrohrs (16) ein Flüssigkeitsvolumen (18) einstellt, das durch einen durch das untere Ende (20) des Auslaufrohrs (16) vorgegeben Flüssigkeitsspiegel nach oben hin begrenzt ist, der sich auf einem Niveau oberhalb des Bodens (17) des Pflanzhohlraums (13) befindet, so dass aus dem Flüssigkeitsvolumen (18) über die mindestens eine Verbindungsöffnung (19) Flüssigkeit in das Substrat (25) abgegeben werden kann, **dadurch gekennzeichnet, dass** das untere Ende (20) des Auslaufrohrs (16) in einem Abstand oberhalb des Bodens (17) des Pflanzhohlraums (13) mündet, der maximal 1 % der Gesamthöhe des Pflanzhohlraums (13) beträgt, und dass die mindestens eine Verbindungsöffnung (19) einen Querschnitt von 0,5 mm² bis 2 mm² aufweist.

2. Vorrichtung nach Anspruch 1, **dadurch gekennzeichnet, dass** der abgetrennte Bereich (15) mindestens eine im Bereich der Oberseite des Pflanzhohlraums (13) mündende Belüftungsöffnung (21) aufweist.

3. Vorrichtung nach einem der vorhergehenden Ansprüche, **dadurch gekennzeichnet, dass** der Flüssigkeitsbehälter (14) zumindest teilweise in das Pflanzgefäß (12) integriert ist und auf seiner Oberseite eine Einfüllöffnung (22) aufweist, die mittels eines ersten Ventils (26) verschließbar ist, das mit einem zweiten Ventil (28) am Auslaufrohr (16) derart gekoppelt ist, dass bei geöffneten ersten Ventil (26) zum Einfüllen von Flüssigkeit das zweite Ventil (28) geschlossen ist, und dass bei geschlossenem ersten Ventil (26) das zweite Ventil (28) geöffnet ist.

4. Vorrichtung nach Anspruch 3, **dadurch gekennzeichnet, dass** die beiden Ventile (26, 28) als Schiebeventile ausgebildet sind und über eine Stange (30) miteinander gekoppelt sind.

5. Vorrichtung nach Anspruch 3 oder 4, **dadurch gekennzeichnet, dass** an der Einfüllöffnung (22) ein Trichter (24) vorgesehen ist.

6. Vorrichtung nach einem der Ansprüche 1 bis 2, **dadurch gekennzeichnet, dass** der Flüssigkeitsbehälter (12) mit seinem Auslaufrohr (16) von oben in ein Belüftungs- und Führungsrohr (34) einsteckbar ist.

7. Vorrichtung nach Anspruch 6, **dadurch gekennzeichnet, dass** der Flüssigkeitsbehälter (12) einen Vorratsbehälter (36) aufweist, der mit dem Auslaufrohr (16) lösbar verbunden ist, vorzugsweise über eine Gewindeverbindung (38).

8. Vorrichtung nach Anspruch 6 oder 7, **dadurch gekennzeichnet, dass** das Belüftungs- und Führungsrohr (34) innerhalb einer Wandung (40) des Pflanzgefäßes (12) gehalten ist.

9. Vorrichtung nach Anspruch 6 oder 7, **dadurch gekennzeichnet, dass** das Belüftungs- und Führungsrohr (34) an der Außenseite der Wandung (40) des Pflanzgefäßes (12) gehalten ist und in eine Schale (44) mündet, in der das Pflanzgefäß (12) aufgenommen ist, wobei am Boden (17) des Pflanzgefäßes (12) mindestens eine Öffnung (46) zum Durchtritt von Flüssigkeit vorgesehen ist.

10. Vorrichtung nach einem der vorhergehenden Ansprüche, **dadurch gekennzeichnet, dass** am Flüssigkeitsbehälter (12) ein Füllstandssensor (46) vorgesehen ist, der eine Schnittstelle (48) zur drahtlosen Kommunikation mit einem externen Überwachungsgerät (50) aufweist.

11. Vorrichtung nach Anspruch 10, **dadurch gekennzeichnet, dass** die Schnittstelle (48) eine Bluetooth-Schnittstelle oder eine WLAN-Schnittstelle zur Kommunikation mit dem externen Überwachungsgerät (50) aufweist.

12. Vorrichtung nach Anspruch 11, **dadurch gekennzeichnet, dass** das externe Überwachungsgerät (50) ein Smartphone, ein Tablet oder ein Computer ist, und das über eine Softwareschnittstelle mit dem Füllstandssensor (46) kommuniziert.

## Claims

1. An apparatus for watering plants received in a non-hydroponic substrate, comprising a planter (12) that is open to the top for receiving at least one plant (23) with non-hydroponic substrate (25), whereby the planter (12) has a plant cavity (13) that is enclosed by a wall (40) and a bottom (17) for receiving a plant (23) with the substrate (25), comprising a liquid container (14), which is at least partially integrated in the planter (12) or which is formed as separate liquid container, which is inserted into the planter (12) from the top or which is held on an outer wall of the planter (12), whereby the liquid container (14) is a container that is sealed towards the outside, which has an outlet tube (16), which ends in a region (15) separated from the plant cavity (13) at a specific distance from the bottom (17) of the planter (12), whereby the separated region communicates with the plant cavity (13) via at least one connecting opening (19) and communicates with an outer side of the planter (12) via at least one ventilation opening (21) in such a way that a liquid volume (18) is established below the outlet tube (16), which liquid volume is limited to the top by a liquid level, which is predetermined by the lower end (20) of the outlet tube (16) and which is at a level above the bottom (17) of the planter cavity (13), so that liquid can be discharged from the liquid volume (18) into the substrate (25) via the at least one connecting opening (19), **characterised in that** the lower end (20) of the outlet tube (16) ends at a distance above the bottom (17) of the plant cavity (13), which is maximally 1% of the total height of the plant cavity (13), and that the at least one connecting opening (19) has a cross-section of 0.5 mm² to 2 mm².

2. The apparatus according to claim 1, **characterised in that** the separated region (15) has at least one ventilation opening (21), which ends in the region of the top side of the plant cavity (13).

3. The apparatus according to any one of the preceding claims, **characterised in that** the liquid container (14) is at least partially integrated into the planter (12) and has, on its top side, a filing opening (22), which can be closed by means of a first valve (26), which is coupled to a second valve (28) on the outlet tube (16) in such a way that when the first valve (26) is open to fill in liquid, the second valve (28) is closed, and that the second valve (28) is open when the first valve (26) is closed.

4. The apparatus according to claim 3, **characterised in that** the two valves (26, 28) are formed as slide valves and are coupled to one another via a rod (30).

5. The apparatus according to claim 3 or 4, **characterised in that** a funnel (24) is provided at the filling opening (22).

6. The apparatus according to any one of claims 1 to 2, **characterised in that** the liquid container (12) can be inserted from the top with its outlet tube (16) into a ventilation and guide tube (34).

7. The apparatus according to claim 6, **characterised in that** the liquid container (12) has a storage container (36), which is releasably connected to the outlet tube (16), preferably via a threaded connection (38).

8. The apparatus according to claim 6 or 7, **characterised in that** the ventilation and guide tube (34) is held within a wall (40) of the planter (12).

9. The apparatus according to claim 6 or 7, **characterised in that** the ventilation and guide tube (34) is held on the outer side of the wall (40) of the planter (12) and ends in a tray (44), in which the planter (12) is received, whereby at least one opening (46) for liquid to pass through is provided on the bottom (17) of the planter (12).

10. The apparatus according to one of the preceding claims, **characterised in that** a fill level sensor (46), which has an interface (48) for the wireless communication with an external monitoring device (50), is provided at the liquid container (12).

11. The apparatus according to claim 10, **characterised in that** the interface (48) has a Bluetooth interface or a WLAN interface for the communication with the external monitoring device (50).

12. The apparatus according to claim 11, **characterised in that** the external monitoring device (50) is a smartphone, a tablet, or a computer, and which communicates with the fill level sensor (46) via a software interface.

## Revendications

1. Dispositif pour l'arrosage de plantes qui sont logées dans un substrat non hydroponique, comprenant un bac à plantes (12) ouvert vers le haut pouvant recevoir au moins une plante (23) avec un substrat (25) non hydroponique, le bac à plantes (12) présentant une cavité de plantation (13) entourée d'une paroi (40) et d'un fond (17), pouvant recevoir une plante (23) avec le substrat (25), un réservoir de liquide (14) qui est au moins partiellement intégré dans le bac à plantes (12) ou qui est conçu comme un réservoir de liquide séparé, lequel est enfiché par le haut dans le bac à plantes (12) ou est maintenu sur une paroi extérieure du bac à plantes (12), le réservoir de liquide (14) étant un récipient étanchéifié vers l'extérieur, lequel présente un tube d'écoulement (16) qui débouche dans une zone (15) séparée de la cavité de plantation (13) à une certaine distance du fond (17) du bac à plantes (12), la zone séparée étant en liaison avec la cavité de plantation (13) par au moins une ouverture de liaison (19) et étant en liaison avec un côté extérieur du bac à plantes (12) par au moins une ouverture d'aération (21), de manière à ce qu'un volume de liquide (18) s'établisse en dessous du tube d'écoulement (16), lequel est limité vers le haut par un niveau de liquide prédéfini par l'extrémité inférieure (20) du tube d'écoulement (16), qui se trouve à un niveau au-dessus du fond (17) de la cavité de plantation (13), de façon à permettre la distribution de liquide dans le substrat (25) à partir du volume de liquide (18) par l'au moins une ouverture de liaison (19), **caractérisé en ce que** l'extrémité inférieure (20) du tube d'écoulement (16) débouche à une distance au-dessus du fond (17) de la cavité de plantation (13), qui représente au maximum 1% de la hauteur totale de la cavité de plantation (13), et **en ce que** l'au moins une ouverture de liaison (19) présente une section transversale de 0,5 mm² à 2 mm².

2. Dispositif selon la revendication 1, **caractérisé en ce que** la zone séparée (15) présente au moins une ouverture d'aération (21) débouchant dans la zone de la partie supérieure de la cavité de plantation (13).

3. Dispositif selon l'une des revendications précédentes, **caractérisé en ce que** le réservoir de liquide (14) est au moins partiellement intégré dans le bac à plantes (12) et présente sur sa partie supérieure une ouverture de remplissage (22) qui peut être fermée au moyen d'une première vanne (26) qui est couplée à une deuxième vanne (28) sur le tube d'écoulement (16) de manière à ce que la deuxième vanne (28) soit fermée pour le remplissage de liquide lorsque la première vanne (26) est ouverte, et à ce que la deuxième vanne (28) soit ouverte lorsque la première vanne (26) est fermée.

4. Dispositif selon la revendication 3, **caractérisé en ce que** les deux vannes (26, 28) sont conçues comme des vannes à coulisse et sont couplées l'une à l'autre par une tige (30).

5. Dispositif selon la revendication 3 ou 4, **caractérisé en ce qu'**un entonnoir (24) est prévu sur l'ouverture de remplissage (22).

6. Dispositif selon l'une des revendications 1 à 2, **caractérisé en ce que** le réservoir de liquide (12) peut être inséré par le haut avec son tube d'écoulement (16) dans un tube d'aération et de guidage (34).

7. Dispositif selon la revendication 6, **caractérisé en ce que** le réservoir de liquide (12) comprend un réservoir de stockage (36) qui est relié de manière amovible au tube d'écoulement (16), de préférence par un raccord fileté (38).

8. Dispositif selon la revendication 6 ou 7, **caractérisé en ce que** le tube d'aération et de guidage (34) est maintenu à l'intérieur d'une paroi (40) du bac à plantes (12).

9. Dispositif selon la revendication 6 ou 7, **caractérisé en ce que** le tube d'aération et de guidage (34) est maintenu sur le côté extérieur de la paroi (40) du bac à plantes (12) et débouche dans une cuvette (44) dans laquelle est logé le bac à plantes (12), au moins une ouverture (46) étant prévue au fond (17) du bac à plantes (12) pour le passage de liquide.

10. Dispositif selon l'une des revendications précédentes, **caractérisé en ce qu'**un capteur de niveau (46) est prévu sur le réservoir de liquide (12), lequel présente une interface (48) pour la communication sans fil avec un appareil de surveillance externe (50).

11. Dispositif selon la revendication 10, **caractérisé en ce que** l'interface (48) comprend une interface Bluetooth ou une interface WLAN pour la communication avec le dispositif de surveillance externe (50).

12. Dispositif selon la revendication 11, **caractérisé en ce que** l'appareil de surveillance externe (50) est un smartphone, une tablette ou un ordinateur, et communique avec le capteur de niveau (46) via une interface logicielle.
